## Europäisches Patentamt

## European Patent Office

## Office européen des brevets

(19)

(11) Veröffentlichungsnummer: **0 022 448**
**B1**

(12) # EUROPÄISCHE PATENTSCHRIFT

(45) Veröffentlichungstag der Patentschrift:
**20.07.83**

(21) Anmeldenummer: **80101695.7**

(22) Anmeldetag: **29.03.80**

(51) Int. Cl.³: **G 01 F 23/04**

(54) Messvorrichtung für den Ölstand mit einer gehäusefesten Hülse und einem herausziehbaren Messstab.

(30) Priorität: **09.06.79 DE 2923464**

(43) Veröffentlichungstag der Anmeldung:
**21.01.81 Patentblatt 81/3**

(45) Bekanntmachung des Hinweises auf die Patenterteilung:
**20.07.83 Patentblatt 83/29**

(84) Benannte Vertragsstaaten:
**AT FR GB IT**

(56) Entgegenhaltungen:

**DE-A-2 460 415**
**DE-C-550 189**
**DE-C-660 987**
**FR-A-1 088 944**
**FR-A-2 388 992**
**US-A-1 588 889**
**US-A-2 239 402**
**US-A-3 488 855**
**US-A-3 735 494**

**Internationale Veröffentlichung WO - A - 80/01319**
**(CATERPILLAR TRACTOR CO)**

(73) Patentinhaber: **Klöckner-Humboldt-Deutz Aktiengesellschaft,**
**Deutz-Mülheimer-Strasse 111 Postfach 80 05 09,**
**D-5000 Köln 80 (DE)**

(72) Erfinder: **Leitgeb, Walter, Dipl.-Ing., *, (verstorben) (DE)**

Messvorrichtung für den Ölstand mit einer gehäusefesten Hülse und einem herausziehbaren Messstab

Die Erfindung betrifft eine Messvorrichtung für den Ölstand in einem geschlossenen Gehäuse, insbesondere von Brennkraftmaschinen und Getrieben, mit einer gehäusefesten Hülse, deren gehäuseinternes Ende unterhalb des minimalen Ölspiegels endet und mit einem herausziehbaren Messstab mit daran angebrachten, die Hülse verschliessenden Stopfen und einem den Einschub begrenzenden Anschlag für die Messstellung.

Die US-A-2 239 402 beschreibt Messvorrichtungen der genannten Art, die in den Fig. 3 bis 7 dargestellt sind. Hierbei endet der Messstab jeweils in einer Ruhestellung oberhalb des maximalen Ölspiegels. Da die Hülse jeweils bis zum Durchtritt aus dem Gehäuse den Messstab vollständig umschliesst, ist eine Entlüftung durch den am oberen Ende des Messstabes angeordneten Stopfen oder an diesen vorbei erforderlich, um eine Verfälschung des Ölstandes innerhalb der Hülse beim Herunterdrücken des Messstabes in eine Messstellung zu vermeiden. Ein derartiger Druckausgleich durch die Hülse vom Gehäuseinneren zur Umgebung kann strengen Kriterien des Emissionsschutzes nicht genügen. Bei Gehäusen, innerhalb derer beim Betrieb ein Überdruck besteht, wird durch den für die Messung notwendigen Druckausgleich in der Hülse dauernd ein gegenüber dem allgemeinen Ölstand erhöhter Ölspiegel entstehen, so dass eine Messung während des Betriebes abhängig vom Masse des Überdrucks verfälscht wird. Damit sind die dargestellten Vorrichtungen in der Regel für Messungen während des Betriebes ungeeignet.

Der Erfindung liegt die Aufgabe zugrunde, eine Messvorrichtung zu schaffen, die auch im Betrieb der mit dem Gehäuse gebildeten Anlage oder Maschine funktionsfähig ist, die das Entweichen von Öldämpfen durch die Hülse während des Betriebes vollständig verhindert und die das Prüfen des Messstabes durch einfaches Herausziehen möglich macht.

Es ist häufig wünschenswert, den Ölstand im Gehäuse einer Maschine im Betrieb zu überprüfen. Als Beispiel für solche Fälle seien Brennkraftmaschinen in Stromerzeugeraggregaten genannt. Dabei muss vollständig sichergestellt werden, dass die Schwallbildung und die Spritzölbildung im Gehäuse den Messstab auch oberhalb des tatsächlichen mittleren Ölspiegels nicht benetzen kann. Gleichzeitig muss jedoch der Ölspiegel innerhalb der Hülse auch dem wahren allgemeinen Ölstand entsprechen.

Die obengenannte Aufgabe wird dadurch gelöst, dass die Hülse möglichst weit oberhalb des maximalen Ölspiegels Druckausgleichslöcher zum Gehäuseinneren besitzt, dass in der Messstellung beim Einschub des Messstabes bis zum Anschlag sich der Stopfen mindestens um das 1 1/2fache der dem Überdruck im Gehäuse entsprechenden Ölsäulenhöhe unter dem äusseren Ende der Hülse befindet und dass der Stopfen die Hülse luftdicht verschliesst.

Durch diese Anordnung wird gewährleistet, dass sich innerhalb der Hülse ein Ölspiegel einstellt, der dem mittleren Ölspiegel im Gehäuse entspricht, aufgrund seiner kleinen Oberfläche aber dessen grossflächige Bewegungen nicht mitvollzieht. Da der Messstab durch die Hülse vollständig gegen Spritzöl geschützt ist, bildet sich an diesem eine Ölstandsmarkierung aus, die dem wahren Ölstand entspricht und beim ersten Herausziehen des Messstabes direkt geprüft werden kann. Die Druckausgleichslöcher und die Lage des Stopfens sorgen dafür, dass die Ölstandsmarkierung beim Herausziehen nicht verfälscht werden. Evtl. im Gehäuse herrschender Überdruck gegen die Umgebung kann den Ölstand in der Hülse im Augenblick des Öffnens zur Umgebung nach oben drücken, bevor über die Druckausgleichslöcher ein Abbau des Überdrucks im Gehäuse stattgefunden hat. Durch die erfindungsgemässe Anordnung des Stopfens ist der Messstab im Augenblick des Öffnens bereits so weit aus dem Öl gehoben, dass diese momentane Ölstandsschwankungen die Ölmarkierungen am Messstab nicht mehr ändern kann. Damit ein Abstreifen der Ölmarkierung an den Wandungen der Hülse beim Herausziehen vermieden wird, ist in weiterer Ausgestaltung der Erfindung die Vorrichtung so beschaffen, dass eine Berührung zwischen Messstab und Hülse im Bereich der Ölmarkierung nicht stattfinden kann.

Ein an sich bekannter flexibler Messstab aus einem Blechband wird in diesem Bereich auf geringere Breite nach innen gezogen, während er auf der übrigen Länge die Breite des Hülsendurchmessers hat und dadurch koaxial geführt ist.

Ein an sich bekannter massiver Messstab wird oberhalb dieses Bereiches mit einem Distanzhalter versehen, der die Querschnittsfläche der Hülse nicht vollständig verschliessen darf, um einen Druckausgleich herstellen zu können, und der beispielsweise die Form von angenieteten federnden Blechstreifen haben kann, die radial vom Messstab abstehen.

Zwei Ausführungsbeispiele der erfindungsgemässen Anordnung sind in den Zeichnungen dargestellt.

Fig. 1 zeigt einen Längsschnitt durch die gesamte Anordnung in einer Ausführung gemäss den Ansprüchen 1, 2 und 5 mit zwei dazu senkrechten Teilschnitten,

Fig. 2 zeigt einen Längsschnitt durch die gesamte Anordnung gemäss der Ansprüche 1, 3 und 4 mit zwei dazu senkrechten Teilschnitten.

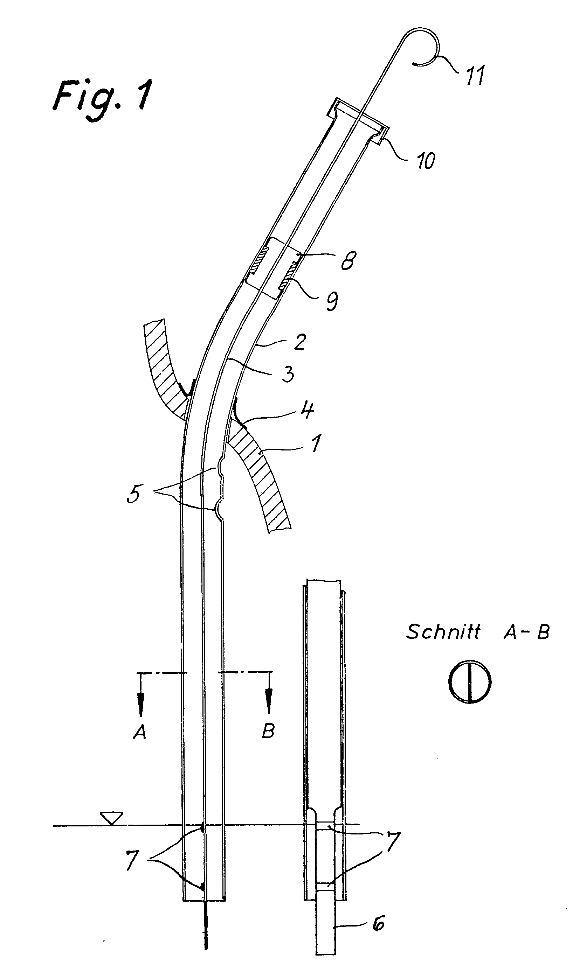

In Fig. 1 wird die Gehäusewand 1 von einer gebogenen Hülse 2 durchbrochen, die den Messstab 3 führt. Die Hülse 2 wird von einer festen Manschette 4 in der Gehäusewand 1 gehalten und reicht mit ihrem gehäuseinternen Ende senkrecht bis unter den Ölspiegel.

Die Hülse 2 hat gegen Spritzöl geschützte gehäuseinterne Druckausgleichsöffnungen 5. Der Messstab 3 besteht aus einem Blechstreifen, dessen Breite dem Innendurchmesser der Hülse 5 im wesentlichen entspricht, jedoch am unteren Ende im Messbereich 6 auf ein geringeres Mass beidseitig nach innen gezogen ist. Der Messbereich 6 ist mit zwei Markierungen 7 für den höchst- und niedrigstzulässigen Ölstand versehen. Der Messstab ist zum ausserhalb des Gehäuses liegenden Ende hin mit einem Stopfen 8 versehen, der mittels einer Schlauchdichtung 9 die Hülse 2 luftdicht verschliesst. Oberhalb des Stopfens 8 ist ein Deckel 10 angebracht, der die Hülse 2 verschliesst und den Einschub begrenzt. Das Ende des Messstabes 3 ist zu einer Schlaufe 11 gebogen.

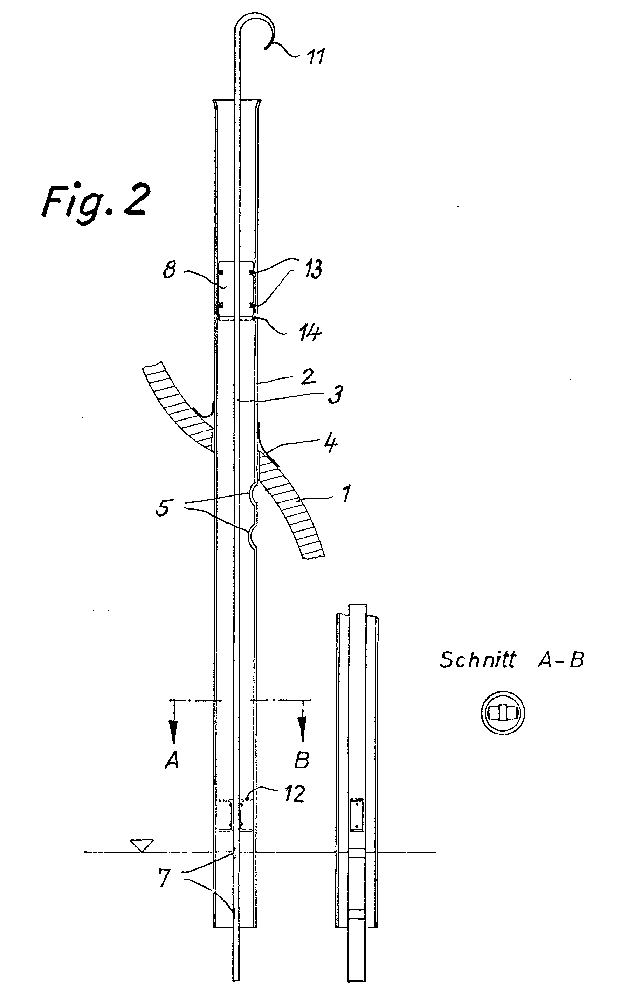

In Fig. 2 sind die der Ausführung nach Fig. 1 entsprechenden Teile mit gleichen Ziffern versehen. Abweichend davon ist die Hülse 2 gerade und der darin geführte Messstab 3 als massiver Vierkantstab ausgeführt. Seine zur Hülse 2 koaxiale Lage wird von einem Distanzhalter 12 aus angenieteten Federblechstreifen bewirkt. Der Stopfen 8 ist zur Hülse 2 mit O-Ringen 13 abgedichtet und begrenzt den Einschub durch Anschlag an einer Verengung 14 der Hülse 2, die die Form eines eingesetzten Ringes hat.

## Patentansprüche

1. Messvorrichtung für den Ölstand in einem geschlossenen Gehäuse (1), insbesondere von Brennkraftmaschinen und Getrieben, mit einer gehäusefesten Hülse (2), deren gehäuseinternes Ende unterhalb des minimalen Ölspiegels endet, und mit einem herausziehbaren Messstab (3) mit daran angebrachtem, die Hülse (2) verschliessenden Stopfen (8) und einem den Einschub begrenzenden Anschlag für die Messstellung, dadurch gekennzeichnet, dass die Hülse (2) möglichst weit oberhalb des maximalen Ölspiegels Druckausgleichslöcher (5) zum Gehäuseinneren besitzt, dass in der Messstellung beim Einschub des Messstabes (3) bis zum Anschlag sich der Stopfen (8) mindestens um das 1 $\frac{1}{2}$fache der dem Überdruck im Gehäuse (1) entsprechenden Ölsäulenhöhe unter dem äusseren Ende der Hülse (2) befindet und dass der Stopfen 8) die Hülse (2) luftdicht verschliesst.

2. Messvorrichtung nach Anspruch 1, mit einer Hülse von rundem Querschnitt und einem aus einem Blechband bestehenden Messstab, dadurch gekennzeichnet, dass das Blechband vom Stopfen (8) bis zu einer in der Messstellung geringfügig über dem maximalen Ölspiegel befindlichen Stelle in der Breite im wesentlichen dem Innendurchmesser der Hülse (2) entspricht und im daran anschliessenden Messbereich (6) beidseitig auf eine geringere Breite nach innen gezogen ist.

3. Messvorrichtung nach Anspruch 1, mit einem starren Messstab üblichen Querschnitts und einer Hülse mit grösserer Querschnittsfläche, dadurch gekennzeichnet, dass der Messstab (3) mit einem in der Messstellung geringfügig über dem maximalen Ölspiegel befindlichen Distanzhalter (12) versehen ist, der dem Innendurchmesser der Hülse (2) angepasst ist und einen Teil der Querschnittsfläche freilässt, und dass der unterhalb des Distanzhalters (12) befindliche Messbereich (6) koaxial und berührungsfrei zur Hülse (2) liegt.

4. Messvorrichtung nach einem der Ansprüche 1 bis 3, dadurch gekennzeichnet, dass der Stopfen (8) zusammen mit einer Verengung (14) der Hülse (2) den Anschlag für den Einschub bildet.

5. Messvorrichtung nach einem der Ansprüche 1 bis 2, dadurch gekennzeichnet, dass ein am Messstab (3) befestigter Deckel (10) zusammen mit dem äusseren Ende der Hülse (2) den Anschlag für den Einschub bildet.

## Claims

1. A gauge for checking the level of oil contained in a sealed reservoir (1), particularly of an internal combustion engine or a transmission, the gauge comprising: a sleeve (2) secured to the reservoir with its end disposed therein terminating below the minimum oil level: and a removable dip rod (3) provided with a plug (8) fastened thereto for sealing the sleeve and with a stop for limiting its insertion beyond its gauging position, characterized in that the sleeve (2) is provided as far above the maximum oil level as possible with vents (5) opening into the interior of the reservoir, that when the dip rod (3) is inserted up to its stop so as to be located in its gauging position the plug (8) is disposed below the sleeve's (2) outer end at a distance therefrom which is at least 1.5 times the height of the oil pressure head corresponding to the excess pressure in the reservoir (1), and in that the plug (8) hermetically seals the sleeve (2).

2. A gauge according to claim 1, in which the sleeve is circular in cross-section and the dip rod is a sheet-metal strip, characterized in that the width of the sheet-metal strip along its length between the plug (8) and a point which in the strip's gauging position is located slightly above the maximum oil level is substantially equal to the internal diameter of the sleeve (2), and in that the strip in its gauging range (6) subsequent to said point is recessed from each of its two narrow faces to a width less than the sleeve's internal diameter.

3. A gauge according to claim 1, in which the dip rod is a rigid one of conventional cross-section and the cross-sectional area of the sleeve greater than that of the dip rod, characterized in that the dip rod (3) is provided with a spacer (12) which in the rod's gauging position is located slightly above the maximum oil level and which corresponds to the internal diameter of the sleeve (2) yet leaves part of the cross-sectional area thereof clear, and in that the gauging range (6) located below the spacer (12) is coaxial but not in contact with the sleeve.

4. A gauge according to any of the claims 1 to 3, characterized in that the plug (8) in conjunction with a restriction (14) of the sleeve (2) form the stop for limiting the insertion.

5. A gauge according to claim 1 or claim 2, characterized in that a cap (10) fastened to the dip rod (3) in conjunction with the outer end face of the sleeve (2) form the stop for limiting the insertion.

## Revendications

1. Dispositif de mesure d'un niveau d'huile placé dans un boîtier (1) fermé, particulièrement dans des machines à combustion interne et mécanismes comportant une gaine (2) fixée au boitier (1), dont l'extrémité intérieure se termine au-dessous du niveau minimal de l'huile et comprend une tige de mesure (3) que l'on peut tirer, sur laquelle se fixe un presse-étoupe (8) contigu à la gaine (2) et une butée limitant l'insertion de la position de mesure, caractérisé en ce que la gaine (2) est pourvue, dans la mesure du possible, loin au-dessus du niveau maximal de l'huile, de cavités de compensation de pression (5) à l'intérieur du carter, et que, dans la position de mesure par l'insertion de la tige de mesure (3) jusqu'à la butée, se trouve la presse-étoupe (8) à au moins une fois ½ du haut de la colonne d'huile correspondant à la surpression dans le boîtier (1), et en ce que le presse-étoupe (8) ferme hermétiquement la gaine (2).

2. Dispositif suivant la revendication 1, comportant une gaine (2) présentant une coupe transversale ronde et une tige de mesure (3) retenue par un guide en fer-blanc, caractérisé en ce que le guide en fer-blanc s'adapte au presse-étoupe jusqu'à une position située sur la position de mesure légèrment au-dessus du niveau maximal de l'huile à la dimension du diamètre réel intérieur de la gaine (2) et la tige de mesure (3) est tirée du calibre de mesure (6) contigu des deux côtés sur une dimension plus petite vers l'intérieur.

3. Dispositif de mesure suivant la revendication 1, avec une tige de mesure rigide (3) montrant une coupe transversale normale et avec une gaine (2) présentant, en coupe transversale, une surface plus grande, caractérisé en ce que la tige de mesure (3) est pourvue d'un porte-écartement (12) se trouvant dans la position de mesure légèrement au-dessus du niveau maximal de l'huile, qui est fixé au diamètre intérieure de la gaine (2), et qui laisse libre une partie de la surface transversale, et en ce que le calibre de mesure (6) placé sous le porte-écartement (12) repose coaxialement et libre de contact sur la gaine (2.

4. Dispositif de mesure suivant l'une quelconque des revendications 1 à 3, caractérisé en ce que le presse-étoupe (8) forme ensemble avec l'étranglement (14) de la gaine (2) la butée d'insertion.

5. Dispositif de mesure suivant les revendications 1 et 2, caractérisé en ce qu'un couvercle (10) fixé solidement à la tige de mesure (3) forme ensemble avec l'extrémité supérieure de la gaine (2) la butée d'insertion.

# Fig. 1

11

10

8

9

2

3

4

1

5

Schnitt A-B

A

B

7

7

6

# Fig. 2

Schnitt A-B